(19) **Europäisches Patentamt / European Patent Office / Office européen des brevets**

(11) **EP 2 139 128 B1**

(12) **EUROPEAN PATENT SPECIFICATION**

(45) Date of publication and mention
of the grant of the patent:
**08.08.2012 Bulletin 2012/32**

(51) Int Cl.:
*H04B 10/13* (2006.01)       *H04J 14/02* (2006.01)

(21) Application number: **09007985.6**

(22) Date of filing: **18.06.2009**

(54) **Wavelength multiplexed optical system with multimode optical fibres**

Optisches Wellenlängenmultiplexsystem mit Mehrmodenleitfasern

Système optique multiplexé en longueurs d'onde avec des fibres optiques multimodales

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.06.2008 FR 0803489**

(43) Date of publication of application:
**30.12.2009 Bulletin 2009/53**

(73) Proprietor: **Draka Comteq B.V.**
**1083 HJ Amsterdam (NL)**

(72) Inventors:
• **Lumineau, Yves**
**95220 Herblay (FR)**
• **Molin, Dennis**
**91210 Draveil (FR)**
• **Gholami, Ashgar**
**84156 Isfahan (IR)**

(74) Representative: **Blokland, Arie**
**Algemeen Octrooi- en Merkenbureau**
**P.O. Box 645**
**5600 AP Eindhoven (NL)**

(56) References cited:
**JP-A- 2006 227 173     US-A- 5 278 687**
**US-B1- 6 525 853     US-B2- 7 242 870**

• **PANICKER R A ET AL: "10 * 10 Gb/s DWDM transmission through 2.2-km multimode fiber using adaptive optics" COMPENDEX,, 1 August 2007 (2007-08-01), XP002512790**

**Description**

The present invention relates to the field of optical fibre transmissions, and more specifically, multimode fibres used for short-distance optical transmission systems requiring a large bandwidth.

Multimode fibres are used for short-distance applications and local networks. The core of a multimode fibre generally has a diameter of approximately 50 $\mu$m, compared with approximately 8 to 9 $\mu$m for the core of a single-mode fibre. Thus, for a particular wavelength, several optical modes propagate simultaneously along the fibre, carrying the same information. The bandwidth is directly linked to the group velocity of the optical modes propagating in the multimode core of the fibre. In order to guarantee a high bandwidth, it is necessary for the group velocities of all the modes to be identical; in other words that the intermodal dispersion, i.e. for the difference in group velocity between the slower mode and the faster mode to be zero, or at least minimized for a particular wavelength. The Multimode fibres have been the subject of international standardization under standard ITU-T G.651 which in particular defines criteria for bandwidths, numerical aperture, core diameter which relate to the requirements for compatibility between fibres.

In order to reduce the intermodal dispersion in a multimode fibre, it has been proposed since the 1970s to produce graded index fibres with a parabolic core profile. Such a fibre has been used for many years and its characteristics have been described in particular in the publications "Multimode theory of graded-core fibres" by D.Gloge et al., Bell System Technical Journal 1973, pp 1563-1578, and "Comprehensive theory of dispersion in graded-index optical fibers" by G. Yabre, Journal of Lightwave Technology, February 2000, Vol. 18, N° 2, pp 166-177.

A graded-index profile can be defined by a relationship between the index value n at a point as a function of the distance r from this point to the centre of the fibre:

$$n = n_1 \sqrt{1 - 2\Delta\left(\frac{r}{a}\right)^{\alpha}}$$

with $\alpha > 0$; ($\alpha \to \infty$ corresponding to a step index profile); $n_1$, the maximum index of the multimode core; a, the radius of the multimode core; and

$$\Delta = \frac{\left(n_1^2 - n_0^2\right)}{2n_1^2}$$

where no is the minimum index of the multimode core, generally corresponding to the index of the cladding (most often made of silica).

A multimode fibre with a graded index therefore has a core profile with a rotational symmetry such that along any radial direction the value of the index decreases continuously from the centre of the fibre to its periphery. These curves are generally representative of the theoretical or target profile of the fibre, the manufacturing constraints of the fibre possibly leading to a slightly different profile.

When a light signal propagates in such a core having a graded index, the different modes experience a different propagation medium, which affects their speed of propagation differently. By adjusting the value of the parameter $\alpha$, it is therefore possible to theoretically obtain a group velocity which is virtually equal for all the modes and thus a reduced intermodal dispersion for a particular wavelength. A value of the parameter $\alpha$ comprised between 1.8 and 2.2 generally allows a satisfactory limitation of the modal dispersion.

An optimum value of the parameter $\alpha$ is however valid for a particular wavelength only. Thus, a multimode fibre typically transmits a monochromatic optical signal having a particular wavelength for which the alpha profile of the fibre has been optimized.

To date, high-bitrate transmission Ethernet networks are in operation, with bitrates of the order of 10 GbE (10 Gb/s). In order to provide such bitrates over more than 300 m (550 m respectively), it is necessary to guarantee an effective bandwidth greater than or equal to 2000 MHz-km (4700 MHz-km respectively). The standard TIA-492AAAC-A standardizes the required performances for 50 $\mu$m-diameter high-bitrate multimode fibres. The effective bandwidth (denoted by the acronym EMB for "Effective Modal Bandwidth") however depends on the source used.

In a manner known *per se*, the effective bandwidth EMB is determined by a measurement of the delay due to the modal dispersion, known under the acronym DMD for "Dispersion Mode Delay" graphical representation. The procedure for measuring the DMD is the subject of standardization (IEC 60793-1-49 and FOTP-220).

A DMD graphical representation is obtained by injecting a light pulse having a particular wavelength $\lambda_0$ at the centre of the fibre and by measuring the pulse delay after a particular fibre length L; the introduction of the light pulse of particular wavelength $\lambda_0$ being radially offset in order to cover the entire core of the multimode fibre. When the parameter $\alpha$ is set to an optimum value $\alpha_{optimum}$, there is virtually no shift in the light pulse delay for a particular wavelength $\lambda_0$ regardless of the injection point of the pulse along the radius r of the fibre core; the intermodal dispersion is low and the effective bandwidth high.

However, this alignment on the DMD graphical representation of the light pulse delays regardless of the radius r, are only valid for a particular wavelength $\lambda_0$ for a particular value of the parameter $\alpha$, $\alpha_{optimum}$. A multimode fibre is thus typically optimized to transmit a signal propagating at an optimum wavelength $\lambda_{optimum}$. When a different wavelength pulse is transmitted in this same multimode fibre, the modal dispersion can become significant and restrict the bandwidth below the value of 2000 MHz-km required by the standards in force.

Thus there is a need for multimode telecommunication networks having bitrates greater than 10 GbE. It is sought to achieve bitrates of 40 GbE or even 100 GbE. It is however difficult to reach such bitrates with a single transmission channel. Nevertheless, for the reasons expressed above, wavelength multiplexing is not possible directly in a multimode fibre.

In a manner known *per se*, wavelength multiplexing, WDM for "Wavelength Division Multiplexing", consists of transmitting several light pulses of different wavelengths on a single optical fibre while combining them on input using a multiplexer (MUX) and separating them on output using a demultiplexer (DEMUX). Typically, dense multiplexing systems, DWDM for "Dense Wavelength Division Multiplexing", are used with single-mode fibres for which modal dispersion is non-existent; only the chromatic dispersion requiring compensation.

Thus, a wavelength multiplexing in a multimode fibre requires not only a compensation for the chromatic dispersion, but also a management of the modal dispersion.

The publication "10 x 10 Gb/s DWDM Transmission Through 2.2-km Multimode Fiber Using Adaptive Optics" by R.A. Panicker et al., IEEE Photonics Technology Letters, Vol. 19, No. 15, pp 1154-1156 published 1st August 2007, proposes a wavelength multiplexing in a multimode optical fibre. An adaptive optics system is provided at the fibre input to shape the signal and minimize the modal dispersion. The adaptive optics system is however complex and costly, and designed to operate in the C band while most multimode applications are located around 850 nm.

Document US 7,242,870 describes a WDM system comprising a multimode optical fibre transmitting a wavelength multiplexed signal. The multimode fibre is germanium-fluorine co-doped and has a controlled index profile in order to maximize the bandwidth in the 720 nm - 1400 nm transmission window. The profile and concentrations of dopants for producing such a fibre are however difficult to control and the cost of the fibre is thereby increased.

Document US 6,525,853 describes a communication system in which N optical signals are combined for transmission in a single multimode fibre. An optical system is provided at the multimode fibre input and introduces a modal coupling diversity which, when combined with the modal dispersion of the fibre, introduces a decorrelation of the signals transmitted and received. This decorrelation makes it possible to retrieve the data flow of each signal transmitted by means of a suitable algorithm. However, the system described in this document is complex to implement.

Document US 5,278,687 describes a bidirectionnel optical transmission system comprising a multimode optical fibre transmitting a wavelength multiplexed signal. The modal dispersion is quite simply ignored, which is prejudicial for the system bandwidth.

Document US 6,363,195 proposes to compensate for the modal dispersion of a multimode optical link by using a concatenation of multimode fibres in order to optimize the bandwidth for two transmission windows, one centred on 850 nm and the other on 1300 nm. This document proposes to use a length of a first multimode fibre having a value of parameter $\alpha_1$ comprised between 0.8 and 2.1 in order to optimize the bandwidth at 850 nm and a length of a second multimode fibre having a value of parameter $\alpha_2$ comprised between the first value $\alpha_1$ and 8 to optimize the bandwidth at 1300 nm. However this document makes no mention of a wavelength multiplexing.

Document JP 2006 227173 A relates to a multimode dispersion compensating fiber that is very wide in a wavelength region intended for a high transmission bandwidth and that is suitable for wavelength multiplexing, a mode dispersion compensating method, an optical waveguide, an optical transmission line and an optical communication system using this fiber. The multimode dispersion compensating fiber (MM-DCF) has a characteristic in that it compensates mode dispersion in a manner that the transmission bandwidth becomes higher in the wavelength or the wavelength band other than the 1.3 $\mu$m band. The optical waveguide is constituted by connecting a fiber to be compensated and an F added MM-DCF 11.

Thus there is a need for a multimode optical transmission system allowing a dense wavelength multiplexing DWDM for an increase in bitrate without reducing the bandwidth, which must be simple and efficient and which can be implemented with a standard multimode transmission fibre.

To this end, the invention proposes to compensate for the modal dispersion of each multiplex channel having a wavelength which is different from the optimum wavelength for which the profile of the multimode transmission fibre was optimized. A plurality of fibres which compensate for the modal dispersion is thus introduced into the system to induce a modal dispersion which is the inverse of the dispersion which is caused by the multimode fibre transmitting the wavelength multiplexed optical signals.

The invention relates more particularly to an optical system comprising:

- a multimode optical fibre capable of transmitting wavelength multiplexed optical signals, characterized in that the system comprises
- a plurality of multimode modal dispersion compensation optical fibres;

each multimode modal dispersion compensation fibre being capable of transmitting one of the wavelengths of the multiplex, each multimode modal dispersion compensation fibre having an optimized index profile such that the modal dispersion for the transmitted wavelength is inversely equal to the modal dispersion induced in the transmission fibre for said wavelength.

According to an embodiment, the multimode transmission optical fibre has a profile with an optimized graded index such that the modal dispersion for one of the wavelengths of the multiplex is approximately zero.

According to an embodiment, the system also comprises:

- a plurality of optical sources, each source emitting an optical signal at one of the wavelengths of the multiplex;
- a wavelength multiplexer introducing the wavelength multiplexed optical signals into the transmission fibre;
- a plurality of input multimode optical fibres connecting each optical source to the multiplexer.

The multimode modal dispersion compensation optical fibres can then be positioned between the optical sources and the multiplexer.

According to an embodiment, the system also comprises:

- a demultiplexer receiving the multimode optical signals at the output of the transmission fibre;
- a plurality of optical receivers, each receiver receiving an optical signal at one of the wavelengths of the multiplex;
- a plurality of output multimode optical fibres connecting each optical receiver to the demultiplexer.

The multimode modal dispersion compensation optical fibres can then be positioned between the optical receivers and the demultiplexer.

According to the embodiments, the multiplexer or the demultiplexer retains the spatial distribution of the multiplexed or demultiplexed optical signal modes.

According to the embodiments, the length of the transmission fibre is comprised between 100 m and 1000 m; and the length of the modal dispersion compensation fibres is comprised between 1 m and 20 m.

Other characteristics and advantages of the invention will become apparent on reading the following description of the embodiments of the invention, given by way of example and with reference to the attached drawings, which show:

- Figure 1, a diagram of a WDM multimode optical system according to the invention;
- Figure 2a, a graphical representation of the modal dispersion in an input fibre of the system according to the invention for an optical signal propagating at the optimum wavelength of the multimode fibre of the multiplexed link;

- Figure 2b, a graphical representation of the modal dispersion at reception of the system according to the invention, for an optical signal propagating at the optimum wavelength of the multimode fibre of the multiplexed link;
- Figure 3a, a graphical representation of the modal dispersion in an input fibre of a system not according to the invention for an optical signal propagating at a wavelength different from the optimum wavelength of the multimode fibre of the multiplexed link;
- Figure 3b, a graphical representation of the modal dispersion at reception of a system not according to the invention for an optical signal propagating at a wavelength different from the optimum wavelength of the multimode fibre of the multiplexed link;
- Figure 4a, a graphical representation of the modal dispersion in an input fibre of the system according to the invention for an optical signal propagating at a wavelength different from the optimum wavelength of the multimode fibre of the multiplexed link;
- Figure 4b, a graphical representation of the modal dispersion at reception of the system according to the invention for an optical signal propagating at a wavelength different from the optimum wavelength of the multimode fibre of the multiplexed link.

The invention proposes an optical system allowing a transmission of wavelength multiplexed multimode signals in order to increase the bitrate of multimode telecommunication networks beyond 10 GbE. This increased bitrate is achieved without adversely affecting the bandwidth. In fact, the system according to the invention proposes to compensate for the modal dispersion of each multiplex channel upstream of the multiplexer so that the signals received at the output of the multimode transmission fibre have a minimized modal dispersion. The transmission system can then guarantee a bandwidth greater than or equal to 2000 MHz-km (4700 MHz-km respectively) after propagation over 300 m (550 m respectively) of multimode fibre.

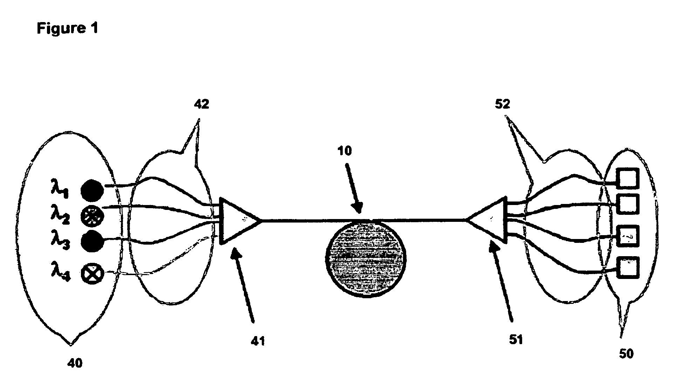

Figure 1 diagrammatically illustrates an optical system according to the invention. The system of Figure 1 is a WDM wavelength multiplexed multimode optical transmission system.

Figure 1 shows a plurality of optical sources 40, each source emitting an optical signal at a particular wavelength ($\lambda_1$, $\lambda_2$, $\lambda_3$, $\lambda_4$). The optical sources can be laser diodes (LED), surface-emitting lasers (VCSEL) or any other commercially available optical source.

Figure 1 also shows a transmission multimode optical fibre 10 arranged between a wavelengths multiplexer 41 and a demultiplexer 51. As stated above, a multimode fibre is optimized to have a minimum modal dispersion for a particular wavelength $\lambda_{optimum}$. A plurality of input multimode optical fibres 42 connects each optical source 40 to the multiplexer 41 and a plurality of output multimode optical fibres 52 connects the demultiplexer 51 to each optical receiver 50.

The invention proposes that modal dispersion compensation fibres, known under the acronym MMDCF for "Multimode Modal Dispersion Compensation Fiber" are introduced into the system for each transmitted wavelength; i.e. that at least one of these fibres has a non-zero modal dispersion for the transmission wavelength that it carries.

In the following detailed description, given with reference to Figure 1, reference will be made systematically to the modal dispersion compensation fibres MMDCF 42 positioned at the input to the multiplexer 41, i.e. which connect each optical source 40 to the multiplexer 41. The output fibres 52 connecting the demultiplexer 51 to each optical receiver 50 can then each have a profile optimized for the reception wavelength of the signal that they carry.

It is however understood that the modal dispersion compensation fibres MMDCF 52 can be positioned at the output of the demultiplexer 51 and connect each receiver 50 to the demultiplexer 51. Similarly, the invention does not exclude the possibility that the input fibres 42 upstream of the multiplexer 41 and the output fibres 52 downstream of the demultiplexer 51 can all be modal dispersion compensation fibres 42, 52. For reasons of clarity, the following description mentions only MMDCF fibres 42 positioned between the optical sources 40 and the multiplexer 41 but a person skilled in the art will understand that the compensation can take place at the reception stage of the system or be distributed between the emission and reception stages. Thus, the reference 42 will hereinafter denote both the input multimode optical fibres and the multimode modal dispersion compensation fibres.

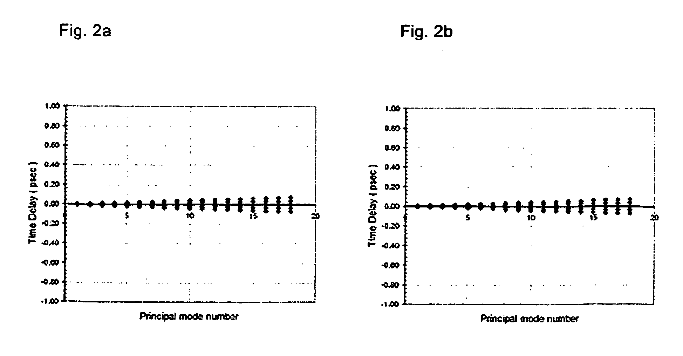

Figures 2a and 2b show graphs illustrating the modal dispersion of the different groups of modes of a light pulse propagating at an optimum wavelength for the transmission multimode fibre 10.

It can in fact be envisaged that one of the optical sources 40 used has an emission wavelength approximately equal to the optimum wavelength $\lambda_{optimum}$ for which the profile of the transmission fibre 10 has been optimized. The modal dispersion in the transmission fibre will then be virtually zero; it can be seen in Figure 2b that the modal dispersion is less than 0.2 psec/m for the highest modes. As a result, it is not necessary to compensate for the modal dispersion for this wavelength upstream of the multiplexer 41. The modal dispersion compensation fibre 42 connecting the optical source 40 emitting a light pulse at the optimum wavelength $\lambda_{optimum}$ of the transmission fibre 10 then has a modal dispersion which is also virtually zero (Figure 2a).

On the other hand, the other optical sources 40 of the system of the invention will necessarily have an emission wavelength different from the optimum wavelength $\lambda_{optimum}$ of the transmission fibre 10 so that a wavelength multiplexing is possible.

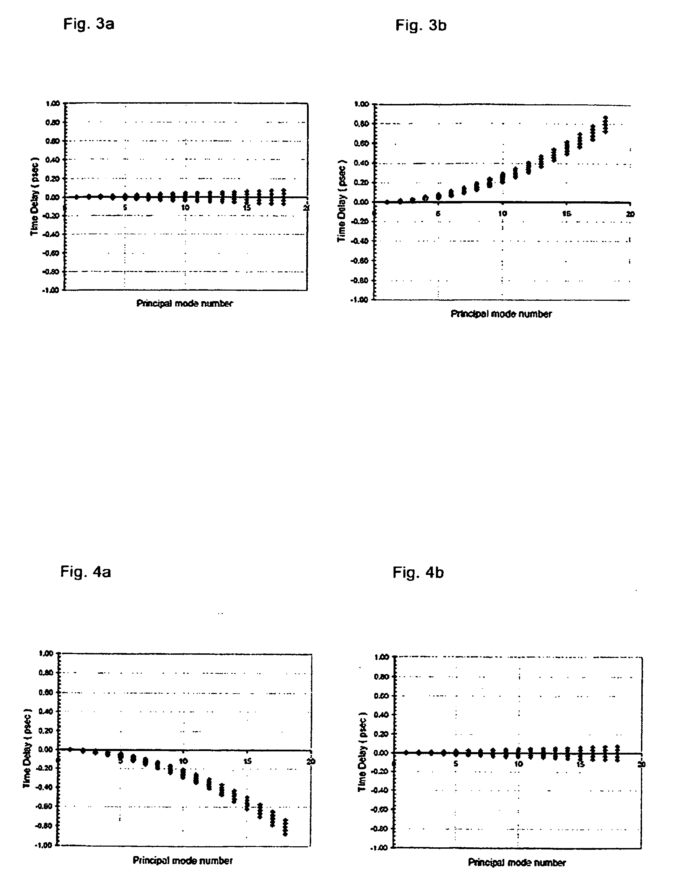

Figure 3a, not according to the invention, therefore shows a graph illustrating the modal dispersion in an input fibre 42 of the multiplexer 41, this input multimode fibre 42 being optimized for the emission wavelength of the optical source 40 to which it is connected. The modal dispersion in Figure 3a is then virtually zero, less than 0.2 psec/m. Figure 3b, not according to the invention, shows a graph illustrating the modal dispersion at reception of the system of an optical signal originating from this source the wavelength of which is different from the optimum wavelength $\lambda_{optimum}$ of the transmission optical fibre 10. It can been seen that one channel of the multiplex which does not have the optimum wavelength of the transmission fibre then undergoes a significant modal dispersion, greater than 0.8 psec/m for the higher modes. As a result, a significant bandwidth reduction occurs.

Thus the system of the invention proposes to introduce a modal dispersion compensation fibre 42 between each source 40 and the multiplexer 41 in order to compensate, upstream of the multiplexer, for the modal dispersion which will be induced in the transmission fibre 10 on the multiplex channels which do not have the optimum wavelength $\lambda_{optimum}$ of the transmission fibre.

Figure 4a thus shows a graph illustrating the modal dispersion in a modal dispersion compensation fibre 42 at the input of the multiplexer 41 in an optical system according to the invention. Each modal dispersion compensation fibre 42 has a controlled modal dispersion such that the multimode optical signal propagation in this compensation fibre 42, and then in the transmission fibre 10, has a modal dispersion which is approximately zero at the output of the transmission fibre 10. The modal dispersion in Figure 4a is therefore non-zero; it is even substantial in order to compensate upstream of the multiplexer 41 for the modal dispersion induced in the transmission fibre 10 for a particular wavelength of the multiplex which is different from the optimum wavelength. Figure 4b shows a graph illustrating the modal dispersion of an optical signal at the output of the transmission optical fibre 10 for a wavelength which is different from the optimum wavelength of the transmission fibre. It can be seen that the modal dispersion remains limited, less than 0.2 psec/m, for this transmission channel. The bandwidth of the optical transmission system according to the invention is thus not reduced, whilst it has been possible to increase the bitrate by multiplexing.

The profiles of the modal dispersion compensation fibres 42 used within the scope of the invention can be graded-index profiles with a value for the alpha parameter optimized so that the modal dispersion at a particular wavelength is inversely equal, over a particular length of fibre, to the modal dispersion induced by the transmission fibre 10 for this particular wavelength. The length of the transmission fibre 10 can be comprised between 100 m and 1000 m according to the applications and the length of the modal dispersion compensation fibres 42 can be comprised between a few metres and a few tens of metres, typically 1 m to 20 m. The lengths of the modal dispersion compensation fibres 42 are not necessarily the same for each multiplex wavelength to be compensated.

The multiplexer 41 chosen for implementing the invention retains the spatial distribution of the modes of the multiplexed signals; i.e. the majority of each mode group coming out from one of the modal compensation fibres 42 is reinjected into the transmission fibre 10 as a single modal group of equivalent order. The modal dispersion compensation introduced on each signal emitted is thus retained at the input of the transmission fibre 10. Such a multiplexer can comprise an assembly of lenses and semitransparent mirrors. If the modal dispersion compensation is carried out wholly or partially downstream of the demultiplexer 51, the latter is also chosen so as to avoid introducing mode mixing between the multiplex channels.

If the modal dispersion compensation is only carried out upstream of the multiplexer 41, each output multimode fibre 52 can then have a profile optimized for the reception wavelength of the signal for which it is intended in order to limit any introduction of a modal dispersion at the end of transmission. This optimization of the output multimode fibre profiles 52 is however not essential if the length of fibre between the demultiplexer 51 and the optical receiver 50 is short, for example less than 10 m. Similarly, if the modal dispersion compensation is only carried out downstream of the demultiplexer 51, each input multimode fibre 42 can then have a profile optimized for the wavelength of the source to which it is connected.

The optical transmission system according to the invention allows an increase in the bitrate of Ethernet networks to 40 Gbits, even to 100 Gbits, using standard multimode fibres having suitably optimized graded index profiles as described above. The optical transmission system according to the invention does not require any optical adapter or any specific algorithm; it is simple and inexpensive to implement.

Of course, the present invention is not limited to the embodiments described by way of example. In particular, a system according to the invention can be envisaged in which none of the sources 40 emits a light pulse at the optimum wavelength $\lambda_{optimum}$ of the transmission fibre 10; each modal dispersion compensation fibre 42 will then have a non-zero modal dispersion.

## Claims

1. An optical system for transmitting a wavelength multiplexed optical signal ($\lambda_1$, $\lambda_2$, $\lambda_3$, $\lambda_4$) comprising:

   - a plurality of optical sources (40), each source emitting an optical signal ($\lambda_1$, $\lambda_2$, $\lambda_3$, $\lambda_4$);
   - a wavelength multiplexer (41) for multiplexing said optical signals into said multiplexed optical signal;
   - a plurality of multimode input optical fibres connecting each optical source (40) to said wavelength multiplexer (41).
   - a multimode transmission optical fibre (10) connected to the output of said wavelength multiplexer and transmission capable of transmitting said wavelength multiplexed optical signals ($\lambda_1$, $\lambda_2$, $\lambda_3$, $\lambda_4$);
   - a demultiplexer (51) at the output of said multimode transmission optical fibre and adapted to receive said wavelength optical signal;
   - a plurality of multimode output optical fibres connected to the output of said demultiplexer (51); and
   - a plurality of optical receivers (50), each connected to a respective multimode output optical fibre and adapted to receive an optical signal at one of the wavelengths of the wavelength multiplexed optical signal ($\lambda_1$, $\lambda_2$, $\lambda_3$, $\lambda_4$), wherein the plurality of multimode input optical fibres and/or the plurality of multimode output optical fibres are

   multimode modal dispersion compensation fibre capable of transmitting one of the wavelengths of the wavelength multiplexed optical signals ($\lambda_1$, $\lambda_2$, $\lambda_3$, $\lambda_4$), each multimode modal dispersion compensation fibre (42, 52) having an optimized Index graded profile with a value for the alpha parameter such that the signals received at the optical receivers have a minimized modal dispersion.

2. The system according to claim 1, in which the modal dIspersion at the output of the multimode optical fibre is less than 0.2 psec/m.

3. The system of claim 1 or 2, In which the multimode transmission optical fibre (10) has a profile with a graded index optimized such that the modal dispersion for one of the wavelengths ($\lambda_1$, $\lambda_2$, $\lambda_3$, $\lambda_4$) of the wavelength multiplexed optical signal is approximately zero.

4. The system of claim 1, in which the multiplexer (41) is adapted to retain the spatial distribution of the modes of the multiplexed optical signals.

5. The system of claim 1, In which the demultiplexer (51) is adapted to retain the spatial distribution modes of the demultiplexed optical signals.

6. The system of any one or more of claims 1 to 5, in which the length of the multimode transmission optical fibre (10) is comprised between 100 m and 1000 m.

7. The system of any one or more off claims 1 to 6, in which the length of the modal dispersion compensation fibres (42, 52) is comprised between 1 m and 20 m.

**Patentansprüche**

1. Optisches System zur Übertragung eines optischen Wellenlängenmultiplexsignals ($\lambda_1, \lambda_2, \lambda_3, \lambda_4$) mit:

   - mehreren optischen Quellen (40), wobei jede Quelle ein optisches Signal ($\lambda_1, \lambda_2, \lambda_3, \lambda_4$) aussendet,
   - einem Wellenlängenmultiplexer (41) zum Multiplexen der optischen Signale in das optische Multiplexsignal,
   - mehreren Multimode-Eingangslichtleitfasern, die jede optische Quelle (40) mit dem Wellenlängemultiplexer (41) verbinden,
   - einer Multimodeübertragungslichtleitfaser (10), die mit dem Ausgang des Wellenlängenmultiplexers verbunden und in der Lage ist, die optischen Wellenlängenmultiplexsignale ($\lambda_1, \lambda_2, \lambda_3, \lambda_4$) zu übertragen,
   - einem Demultiplexer (51) am Ausgang der Multimodeübertragungslichtleitfaser, der so ausgebildet ist, dass er das optische Wellenlängensignal empfängt,
   - mehreren Multimode-Ausgangslichtleitfasern, die mit dem Ausgang des Demultiplexers (51) verbunden sind, und
   - mehreren optischen Empfängern (50), die jeweils mit einer jeweiligen Multimode-Ausgangslichtleitfaser verbunden und so ausgebildet sind, dass sie ein optisches Signal mit einer der Wellenlängen des optischen Wellenlängenmultiplexsignals ($\lambda_1, \lambda_2, \lambda_3, \lambda_4$) empfangen, wobei die mehreren Multimode-Eingangslichtleitfasern und/oder die mehreren Multimode-Ausgangslichtleitfasern

   Multimode- Modendispersionskompensationsfasern sind, die zur Übertragung einer der Wellenlängen der optischen Wellenlängenmultiplexsignale ($\lambda_1, \lambda_2, \lambda_3, \lambda_4$) in der Lage sind, wobei jede Multimode-Modendispersionskompensationsfaser (42, 52) ein optimiertes Gradientindexprofil mit einem Wert für den Alpha-Parameter hat, derart, dass die an den optischen Empfängern empfangenen Signale eine minimierte Modendispersion aufweisen.

2. System nach Anspruch 1, bei dem die Modendispersion am Ausgang der Multimode-Lichtleitfaser kleiner als 0,2 ps/m ist.

3. System nach Anspruch 1 oder 2, bei dem die Multimodeübertragungslichtleitfaser (10) ein Profil mit einem Gradientenindex aufweist, der so optimiert ist, dass die Modendispersion für eine der Wellenlängen

($\lambda_1, \lambda_2, \lambda_3, \lambda_4$) des optischen Wellenlängenmultiplexsignals annähernd Null ist.

4. System nach Anspruch 1, bei dem der Multiplexer (41) so ausgebildet ist, dass er die räumliche Verteilung der Moden der optischen Multiplexsignale beibehält.

5. System nach Anspruch 1, bei dem der Demultiplexer (51) so ausgebildet ist, dass er die räumlichen Verteilungsmoden der optischen Demultiplexsignale beibehält.

6. System nach einem oder mehreren der Ansprüche 1 bis 5, bei dem die Länge der Multimodeübertragungslichtleitfasern (10) zwischen 100 m und 1000 m beträgt.

7. System nach einem oder mehreren der Ansprüche 1 bis 6, bei dem die Länge der Modendispersionskompensationsfasern (42, 52) zwischen 1 m und 20 m beträgt.

**Revendications**

1. Système optique permettant de transmettre un signal optique multiplexé en longueur d'onde ($\lambda_1, \lambda_2, \lambda_3, \lambda_4$) comprenant :

   - une pluralité de sources optiques (40), chaque source émettant un signal optique ($\lambda_1, \lambda_2, \lambda_3, \lambda_4$);
   - un multiplexeur de longueur d'onde (41) permettant de multiplexer lesdits signaux optiques en ledit signal optique multiplexé ;
   - une pluralité de fibres optiques d'entrée multimode connectant chaque source optique (40) audit multiplexeur en longueur d'onde (41) ;
   - une fibre optique de transmission multimode (10) connectée à la sortie dudit multiplexeur en longueur d'onde et capable de transmettre lesdits signaux optiques multiplexés en longueur d'onde ($\lambda_1, \lambda_2, \lambda_3, \lambda_4$) ;
   - un démultiplexeur (51) au niveau de la sortie de ladite fibre optique de transmission multimode et adapté pour recevoir ledit signal optique en longueur d'onde ;
   - une pluralité de fibres optiques de sortie multimode connectée à la sortie dudit démultiplexeur (51) ; et
   - une pluralité de récepteurs optiques (50), chacun étant connecté à une fibre optique de sortie multimode respective et adapté pour recevoir un signal optique au niveau de l'une des longueurs d'onde du signal optique multiplexé en longueur d'onde ($\lambda_1, \lambda_2, \lambda_3, \lambda_4$), dans lequel la pluralité de fibres optiques d'entrée multimode et/ou la pluralité de fibres optiques de sortie multimode sont

une fibre de compensation de distorsion modale multimode capable de transmettre l'une des longueurs d'onde des signaux optiques multiplexés en longueurs d'onde ($\lambda_1, \lambda_2, \lambda_3, \lambda_4$), chaque fibre de compensation de distorsion modale multimode (42, 52) ayant un profil graduel d'indice optimisé avec une valeur pour le paramètre alpha tel que les signaux reçus au niveau des récepteurs optiques ont une distorsion modale minimisée.

2. Système selon la revendication 1, dans lequel la distorsion modale au niveau de la sortie de la fibre optique multimode est inférieure à 0,2 psec/m.

3. Système selon la revendication 1 ou 2, dans lequel la fibre optique de transmission multimode (10) a un profil avec un indice graduel optimisé tel que la distorsion modale pour l'une des longueurs d'onde ($\lambda_1$ $\lambda_2, \lambda_3, \lambda_4$) du signal optique multiplexé en longueur d'onde est approximativement nulle.

4. Système selon la revendication 1, dans lequel le multiplexeur (41) est adapté pour retenir la distribution spatiale des modes des signaux optiques multiplexés.

5. Système selon la revendication 1, dans lequel le démultiplexeur (51) est adapté pour retenir les modes de distribution spatiale des signaux optiques démultiplexés.

6. Système selon l'une quelconque ou plusieurs des revendications 1 à 5, dans lequel la longueur de la fibre optique de transmission multimode (10) est comprise entre 100 m et 1 000 m.

7. Système selon l'une quelconque ou plusieurs des revendications 1 à 6, dans lequel la longueur des fibres de compensation de distorsion modale (42, 52) est comprise entre 1 m et 20 m.

**Figure 1**

Fig. 2a

Fig. 2b

Fig. 3a

Fig. 3b

Fig. 4a

Fig. 4b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7242870 B
- US 6525853 B
- US 5278687 A
- US 6363195 B
- JP 2006227173 A

### Non-patent literature cited in the description

- **D.GLOGE et al.** Multimode theory of graded-core fibres. *Bell System Technical Journal,* 1973, 1563-1578
- **G. YABRE.** Comprehensive theory of dispersion in graded-index optical fibers. *Journal of Lightwave Technology, February,* February 2000, vol. 18 (2), 166-177
- **R.A. PANICKER ; 1ST AUGUST 2007 et al.** 10 x 10 Gb/s DWDM Transmission Through 2.2-km Multimode Fiber Using Adaptive Optics. *IEEE Photonics Technology Letters,* vol. 19 (15), 1154-1156